(19) Europäisches Patentamt
European Patent Office
Office européen des brevets

(11) **EP 1 983 326 B1**

(12) **EUROPEAN PATENT SPECIFICATION**

(45) Date of publication and mention
of the grant of the patent:
**20.10.2010 Bulletin 2010/42**

(51) Int Cl.:
***G01M 15/04*** *(2006.01)*     ***G01M 15/11*** *(2006.01)*
***F02D 41/12*** *(2006.01)*     ***F02D 41/22*** *(2006.01)*
***F02D 41/34*** *(2006.01)*

(21) Application number: **07106310.1**

(22) Date of filing: **17.04.2007**

(54) **Method for identifying a malfunctioning cylinder of a multicylinder combustion engine**

Verfahren zur Erkennung eines defekten Zylinders in einem mehrzylindrigen Verbrennungsmotor

Procédé d'identification d'un cylindre défaillant d'un moteur à combustion à multicylindres

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**22.10.2008 Bulletin 2008/43**

(73) Proprietor: **Scania CV AB (PUBL)**
**151 87 Södertälje (SE)**

(72) Inventors:
• **Völcker, Björn**
**SE-126 39, Hägersten (SE)**

• **Sahi, Tommy**
**SE-151 32, SÖDERTÄLJE (SE)**

(74) Representative: **Löfgren, Jonas et al**
**Bjerkéns Patentbyrå KB**
**Box 1274**
**801 37 Gävle (SE)**

(56) References cited:
**WO-A-2004/003503**     **DE-A1- 19 540 826**
**DE-C1- 19 813 495**     **US-A- 5 709 192**

EP 1 983 326 B1

**Description**

FIELD OF THE INVENTION AND PRIOR ART

The present invention relates to a method for identifying a malfunctioning cylinder of a multicylinder combustion engine. The invention also relates to a computer program product comprising computer program code for implementing a method according to the invention, and a computer.

BACKGROUND ART

When a multicylinder combustion engine fails to deliver its rated power, this may be due to the malfunctioning of any of the cylinders of the engine. In the case of a diesel engine, the malfunctioning of a cylinder may be due to underfueling caused by a faulty fuel injector or to loss of compression caused by worn piston rings or valves. In the case of an engine of the spark-ignition type, the malfunctioning of a cylinder may also be due to a faulty spark plug. The malfunctioning of a cylinder may for instance result in rough engine operation, poor cylinder compression and/or reduced engine torque.

DE 19540826 A1 discloses a method for identifying a malfunctioning cylinder of a multicylinder combustion engine. First, a specified operating condition for the combustion engine is set and the engine speed is determined. The fuel supply to the cylinder to be tested is then interrupted and the engine speed is determined anew. If the difference between the engine speed before and after the fuel supply interruption is smaller than a predetermined value, the tested cylinder is considered to be malfunctioning. One disadvantage with this known method is that the fuel quantities injected into the cylinders during the test has to be relatively small in order to prevent the engine from racing. The interruption of fuel supply to only one cylinder will not prevent the engine from racing if the other cylinders receive a large fuel quantity. Thus, this test does not allow the engine to be tested when running at a speed and having a supply of fuel corresponding to a normal driving situation for the associated vehicle. Another disadvantage with this known method is that the difference between the engine speed before and after the fuel supply interruption is relatively small for an engine with several cylinders, which makes it rather difficult to identify a malfunctioning cylinder based on this difference. Furthermore, one or more of the cylinders or fuel injectors to which fuel are supplied after the fuel supply interruption to the tested cylinder may be malfunctioning or have a reduced capacity and therefore introduce substantial variations during a whole or a part of an engine revolution, which could make it difficult to interpret a detected difference between the engine speed before and after the fuel supply interruption.

EP 1 520 163 B1 discloses another method for identifying a malfunctioning cylinder of a multicylinder combustion engine. According to this method, the engine is accelerated to a given first engine speed, whereupon the fuel supply is interrupted to all the cylinders of the engine except an individual cylinder to be tested, which is supplied with a predetermined fuel quantity. The engine speed is then allowed to decrease from the first engine speed to a given second engine speed and the time it takes for the engine to decrease to this second engine speed is counted. This recorded deceleration time may then for instance be compared with a reference value in order to establish whether or not the tested cylinder is malfunctioning. Since fuel is supplied only to the tested cylinder during the deceleration phase, this cylinder may be supplied with a relatively large fuel quantity. This implies that an individual cylinder may be tested at an engine speed and with a supplied fuel quantity corresponding to a normal driving situation for the associated vehicle. A disadvantage with this known method is, however, that the test conditions, especially the engine temperature, may vary to a relatively large extent when the different cylinders of an engine are tested, which makes it difficult to evaluate the test values for different cylinders in a reliable manner.

US 5709192 discloses yet another method according to the prior art.

DISCLOSURE OF THE INVENTION

The object of the present invention is to propose a new and advantageous manner of identifying a malfunctioning cylinder of a multicylinder combustion engine.

According to the invention, this object is achieved by a method having the features defined in claim 1.

According to the inventive method:

-   a first test cycle is performed involving the execution of the following test cycle steps:

    1A) acceleration of the engine to an upper engine speed,
    1 B) interruption of the fuel supply to all the cylinders of the engine so as to allow the engine speed to decrease from the upper engine speed to a lower engine speed,
    1 C) recording of a first set of test data as to the engine speed as a function of time during the decrease of the engine speed from the upper engine speed to the lower engine speed in step 1 B,
    1 D) processing of the recorded first set of test data so as to establish a first set of comparison data representing the retarding torque of the engine during the decrease of the engine speed from the upper engine speed to the lower engine speed in step 1B;

- a second test cycle is performed involving the execution of the following test cycle steps:

  2A) acceleration of the engine to an upper engine speed,

  2B) interruption of the fuel supply to all the cylinders of the engine except one individual cylinder, here denominated test cylinder, so as to allow the engine speed to decrease from the upper engine speed to a lower engine speed while maintaining supply of a given fuel quantity to the test cylinder,

  2C) recording of a second set of test data as to the engine speed as a function of time during the decrease of the engine speed from the upper engine speed to the lower engine speed in step 2B,

  2D) processing of the recorded second set of test data in the same manner as the first set of test data so as to establish a second set of comparison data representing the retarding torque of the engine during the decrease of the engine speed from the upper engine speed to the lower engine speed in step 2B;

- the second set of comparison data is compared with the first set of comparison data so as to establish a test value representing the torque exerted by the test cylinder during step 2B; and

- the test value is used for establishing whether the test cylinder is malfunctioning or not.

By performing such a first and second test cycle immediately after each other for each individual cylinder to be tested, it will be possible to secure that the set of comparison data established for the test cylinder always is compared with a corresponding set of comparison data established during a situation with minimal changes in the test conditions as compared to the test conditions prevailing when the fuel supply is interrupted to all the cylinders except the test cylinder. Hereby, all the cylinders of the engine may be tested with minimal influence on the test results from changes of the engine temperature occurring in the time period between the testing of the first cylinder and the testing of the final cylinder, which makes it possible to obtain reliable and accurate test results.

According to an embodiment of the invention:

- the first set of comparison data is established so as to represent the retarding torque of the engine as a function of engine speed during step 1 B; and
- the second set of comparison data is established so as to represent the retarding torque of the engine as a function of engine speed during step 2B.

This will facilitate the comparison of the first and second sets of comparison values.

According to another embodiment of the invention, the test value is established by forming the difference between the second set of comparison data and the first set of comparison data as a function of engine speed and then forming the average or a weighted average of this difference over the entire or a given part of the engine speed interval between the upper engine speed and the lower engine speed. Hereby, a relevant test value may be established in a simple manner.

According to another embodiment of the invention, a test sequence comprising said first test cycle and said second test cycle is carried out separately for each individual cylinder of the engine, with the same or at least essentially the same test conditions and with the same on-time applied to the test cylinder in step 2B in each test sequence, so as to establish a separate test value for each individual cylinder of the engine. The test values for the cylinders are then mutually compared in order to establish whether any of the cylinders is malfunctioning, for instance by establishing the deviation of the test value for an individual cylinder from the average of the test values for all the cylinders of the engine. Hereby, it will be possible to establish if any of the cylinders of the engine deviates in an unexpected manner from the other cylinders and such a possible deviation will indicate that the deviating cylinder is not functioning properly.

According to another embodiment of the invention:

- the first set of test data is used for establishing a first set of derivative data as to the derivative of the engine speed as a function of engine speed during step 1 B, the first set of comparison data being established based on this first set of derivative data, for instance by multiplying the derivative of the engine speed by a moment of inertia value representing the moment of inertia of the parts of the engine and the associated driveline that are rotating during the execution of the first and second test cycles; and
- the second set of test data is used for establishing a second set of derivative data as to the derivative of the engine speed as a function of engine speed during step 2B, the second set of comparison data being established based on this second set of derivative data, for instance by multiplying the derivative of the engine speed by the moment of inertia value.

Further advantageous features of the method according to the invention are indicated in the dependent claims and the following description.

The invention also relates to computer program product having the features defined in claim 11. Further advantageous features of the computer program product according to the invention are indicated in the dependent claims and the following description.

Furthermore, the invention relates to a computer having the features defined in claim 20.

BRIEF DESCRIPTION OF THE DRAWINGS

With reference to the appended drawings, a specific description of preferred embodiments of the invention cited as examples follows below. In the drawings:

Fig 1    is a schematic diagram of a combustion engine and a system for performing a method according to the present invention,

Fig 2    is a schematic outline diagram of a computer for implementing a method according to the invention,

Fig 3    is a diagram showing the engine speed as a function of time during a first test cycle included in a method according to the invention,

Fig 4    is a diagram showing the engine speed as a function of time during a second test cycle included in a method according to the invention,

Fig 5    is a diagram showing the engine retarding torque as a function of engine speed during said first and second test cycles and the deviation between the engine retarding torque of the second test cycle and the engine retarding torque of the first test cycle,

Fig 6    is a bar diagram showing the contribution in torque from the individual cylinders of a six-cylinder engine,

Fig 7    is a bar diagram showing the deviation of the test value for each one of said cylinders from the average of the test values for all six cylinders, and

Fig 8    is a flow diagram illustrating a method according to an embodiment of the invention.

MODES FOR CARRYING OUT THE INVENTION

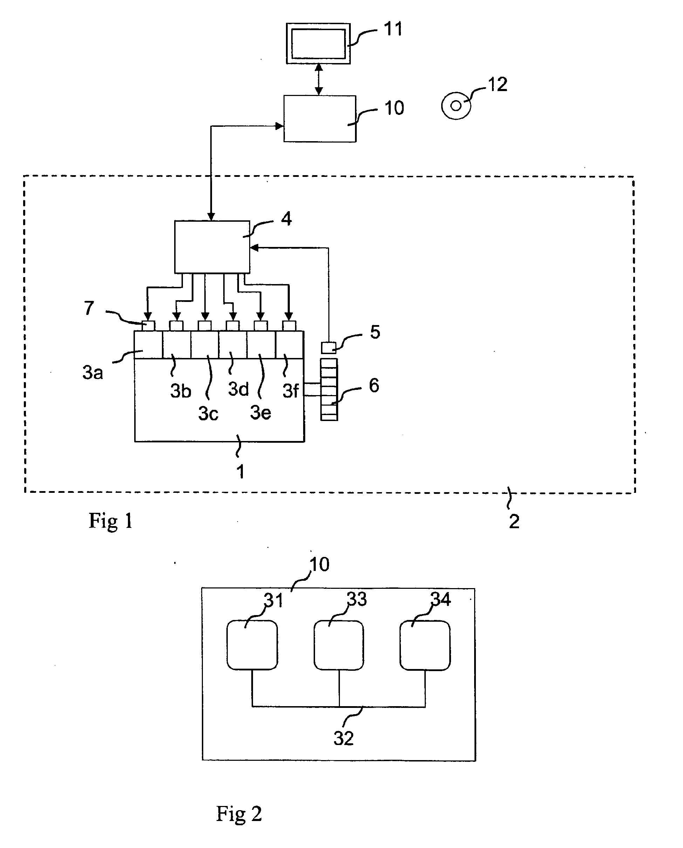

Fig 1 schematically illustrates a combustion engine 1 of an appliance 2 and a system for performing a method according to the present invention. The appliance 2 is for instance a motor vehicle in the form of a car, a lorry, a towing vehicle or a bus, but may also be a ship, a power plant etc. The combustion engine 1 is for instance a diesel engine. In the illustrated example, the engine 1 comprises six cylinders 3a-3f. However, it should be realized that the invention is applicable to any type of multicylinder combustion engine with any known number of cylinders. The engine 1 is controlled by an electronic control unit 4 arranged in the appliance 2. The engine control unit 4 is arranged to receive information as to the engine speed, i.e. the rotational speed of the engine, from an engine-speed sensor 5. The engine-speed sensor 5 is for instance an inductive sensor or a Hall-effect sensor arranged to sense the rotation of the engine's toothed flywheel 6. The engine control unit 4 may be arranged to receive a measuring signal directly from the sensor 5, in which case the engine control unit is provided with calculating means for calculating, based on the measuring signal from said sensor, an engine speed value representing the present speed of the engine 1. Alternatively, the engine control unit 4 may be arranged to receive such an engine speed value from another control unit that is adapted to receive and process the measuring signal from the engine-speed sensor 5. The appliance 2 may of course also be provided with more than one engine-speed sensor and any other suitable type of sensor for measuring the engine speed at any suitable position.

Each cylinder 3a-3f is provided with its own fuel injector 7, which regulates the supply of fuel to the associated cylinder. The injectors 7 are controlled by means of the engine control unit 4, which controls the on-times for each individual injector so as to thereby control the quantity of fuel to be injected into the cylinder associated with the injector.

In this description and the subsequent claims, the term "on-time" refers to the opening time of an injector 7, i.e. the duration of the time period during which the injector is kept open in order to inject fuel into the associated cylinder 3a-3f in connection with a single stroke of the engine. The quantity of fuel injected into a cylinder in connection with a stroke of the engine depends on the length of this on-time and the pressure of the fuel supplied to the injector.

In the illustrated example, the inventive method is initiated and controlled by means of an external computer 10, for instance in the form of an external PC. The external computer 10 may be directly connected to the engine control unit 4, as illustrated in Fig 1, but may of course also be indirectly connected to the engine control unit 4 in any suitable manner. The communication between the external computer 10 and the engine control unit 4 may of course be partly or entirely wireless. The inventive method could of course also be initiated and controlled by the engine control unit 4 itself or by another electronic control unit of the appliance 2.

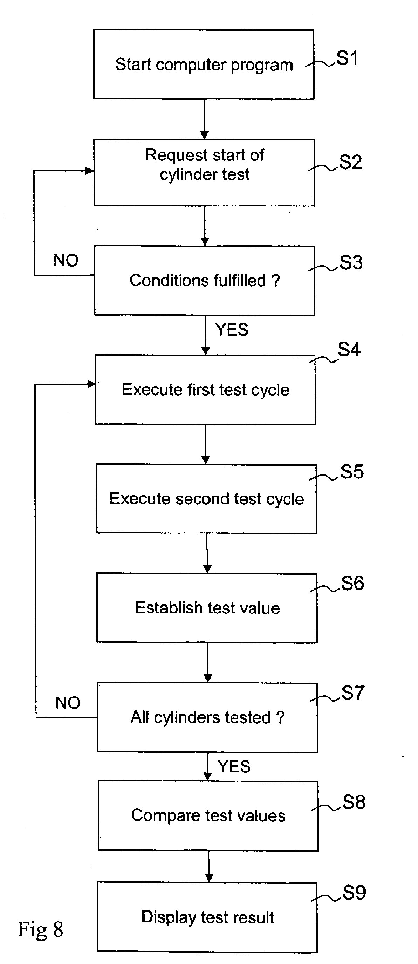

A flow diagram illustrating an embodiment of an inventive method for identifying a malfunctioning cylinder of a multicylinder combustion engine is shown in Fig 8. In a first step S1, an operator starts a cylinder test computer program on a computer 10, for instance on an external computer, which causes a display 11 connected to the computer to show a suitable user interface. In a second step S2, the operator request a start of a cylinder test via the user interface. The request is sent to the engine control unit 4, which in a third step S3 checks whether one or several given conditions for a start of the cylinder test are fulfilled. One condition may be that the gearbox associated with the engine 1 to be tested is in the neutral position. Also other conditions are conceivable. If any of the given conditions is not fulfilled, the request to start the cylinder test is denied and step S2 has to be repeated.

If the given conditions are fulfilled, the method proceeds to a fourth step S4, in which a first test cycle involving the following test cycle steps are executed under the control of the cylinder test computer program:

1A) the engine 1 is accelerated to an upper engine speed,

1 B) the fuel supply to all the cylinders 3a-3f of the engine 1 is interrupted so as to allow the engine speed to decrease from the upper engine speed to a lower engine speed,

1 C) a first set of test data as to the engine speed as a function of time during the decrease of the engine speed from the upper engine speed to the lower engine speed in step 1 B is recorded, and

1 D) the recorded first set of test data is processed so as to establish a first set of comparison data representing the retarding torque of the engine 1 during the decrease of the engine speed from the upper engine speed to the lower engine speed in step 1B.

A second test cycle involving the following test cycle steps are then executed under the control of the cylinder test computer program in a fifth step S5:

2A) the engine 1 is accelerated to an upper engine speed,

2B) the fuel supply to all the cylinders 3a-3f of the engine 1 except one individual cylinder, here denominated test cylinder, is interrupted so as to allow the engine speed to decrease from the upper engine speed to a lower engine speed while maintaining supply of a given fuel quantity to the test cylinder,

2C) a second set of test data as to the engine speed as a function of time during the decrease of the engine speed from the upper engine speed to the lower engine speed in step 2B is recorded, and

2D) the recorded second set of test data is processed in the same manner as the first set of test data so as to establish a second set of comparison data representing the retarding torque of the engine 1 during the decrease of the engine speed from the upper engine speed to the lower engine speed in step 2B.

The retarding torque of the engine 1 is stronger than the driving torque exerted by the test cylinder in step 2B of the second test cycle, even when the test cylinder is supplied with a rather large fuel quantity. Thus, the test cylinder is not capable of keeping the engine 1 running at the upper engine speed and the interruption of the fuel supply to the other cylinders in step 2B of the second test cycle will consequently cause a decrease of the engine speed from the upper engine speed to a lower engine speed.

The upper engine speed used in the second test cycle is not necessarily equal to the upper engine speed used in the first test cycle and the lower engine speed used in the second test cycle is not necessarily equal to the lower engine speed used in the first test cycle. The main thing is that the engine speed interval between the upper engine speed and the lower engine speed in the second test cycle overlaps the engine speed interval between the upper engine speed and the lower engine speed in the first test cycle, i.e. that the engine speed interval between the upper engine speed and the lower engine speed in the second test cycle at least partially coincides with the engine speed interval between the upper engine speed and the lower engine speed in the first test cycle. In step 2A the engine 1 is suitably accelerated to an upper engine speed which is equal or at least essentially equal to the upper engine speed used in step 1A, and in step 2B the engine speed is suitably allowed to decrease to a lower engine speed which is equal or at least essentially equal to the lower engine speed used in step 1 B.

In order to secure as uniform test conditions as possible, the first and second test cycles should be executed as close as possible in time upon each other. According to the flow diagram of Fig 8, the test cycle denominated "second test cycle" is executed after the test cycle denominated "first test cycle". However, the chronological order between these test cycles could alternatively be the opposite. Thus, the "second test cycle" could as an alternative be executed immediately before the "first test cycle", if so considered suitable.

In a sixth step S6, the second set of comparison data is compared with the first set of comparison data so as to establish a test value representing the torque exerted by the test cylinder during step 2B of the second test cycle. The test value is stored in a memory in the computer 10.

In a seventh step S7, it is checked if all the cylinders 3a-3f of the engine 1 have been tested. If this is not the case, steps S4-S7 are repeated for a new cylinder of the engine 1 until a test value for each cylinder 3a-3f of the engine has been established. Thus, a test sequence comprising said first test cycle and said second test cycle is carried out separately for each individual cylinder 3a-3f of the engine 1, with the same or at least essentially the same test conditions and with the same on-time applied to the test cylinder in step 2B of the second test cycle in each test sequence.

When it is established in step S7 that all the cylinders have been tested, the test values for the cylinders are mutually compared in step S8 in order to establish whether any of the cylinders is malfunctioning. Information as to the test result is then displayed on a user interface of the display 11 in a subsequent step S9. The test values for the cylinders 3a-3f are with advantage mutually compared in step S8 by establishing the deviation of the test value for an individual cylinder from the average of the test values for all the cylinders of the engine 1. The deviation of the test value for an individual cylinder from the average of the test values for all the cylinders of the engine 1 may then be compared with a given deviation value representing an allowed deviation for a properly functioning cylinder in order to establish whether the individual cylinder in question is likely to be malfunctioning or not.

The above-mentioned first set of comparison data and second set of comparison data are suitably established is steps S4 and S5 so as to represent the retarding torque of the engine 1 as a function of engine speed during step 1 B of said first test cycle and during step 2B of said second test cycle, respectively. In this case, the test value for the test cylinder may be established in step S6 by forming the difference between the second set of comparison data and the first set of comparison data as a function of engine speed and then forming the average or a weighted average of this difference over the entire or a given part of the engine speed interval between the upper engine speed and the lower engine speed.

The first set of test data is with advantage used for establishing a first set of derivative data as to the derivative of the engine speed as a function of engine speed during step 1 B of said first test cycle. In this case, the second set of test data is used for establishing a second set of derivative data as to the derivative of the engine speed as a function of engine speed during step 2B of said second test cycle. The first set of comparison data and the second set of comparison data may then be established based on the first set of derivative data and the second set of derivative data, respectively, by multiplying the derivative of the engine speed by a moment of inertia value representing the moment of inertia of the parts of the engine and the associated driveline that are rotating during the execution of the first and second test cycles. This processing of the test data is based on the fact that the torque $M$ of a rotating body is: $M = J\dfrac{d\omega}{dt}$, where

$J$ is the moment of inertia of the rotating body and $\dfrac{d\omega}{dt}$

is the angular acceleration of the rotating body. The difference between the second and first set of comparison data will in this case indicate the actual magnitude of the torque exerted by the test cylinder during step 2B of the second test cycle.

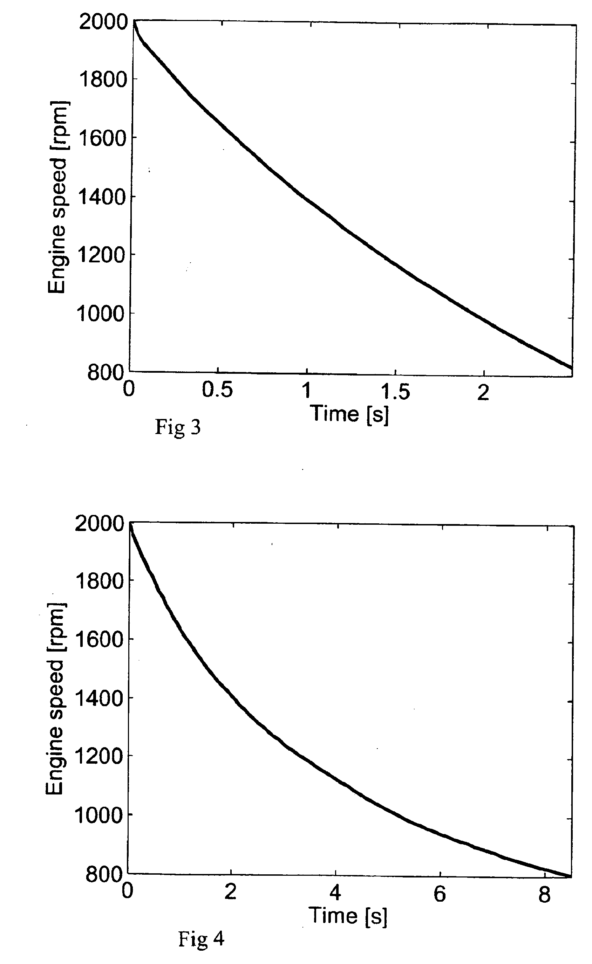

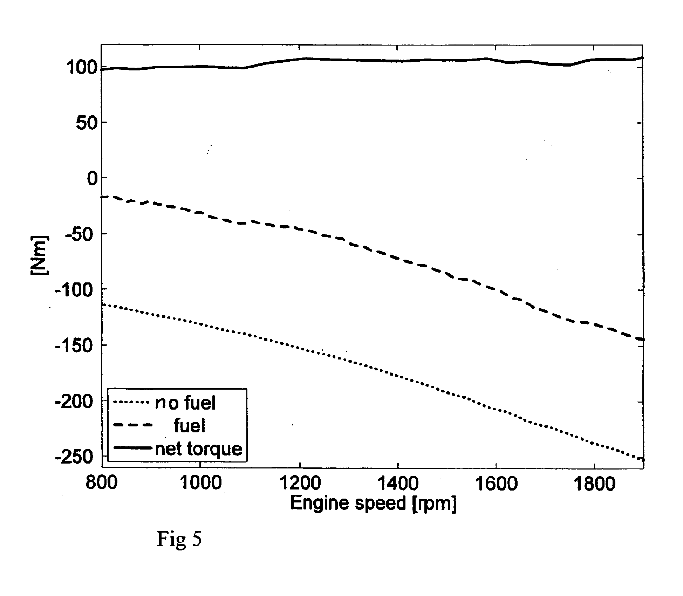

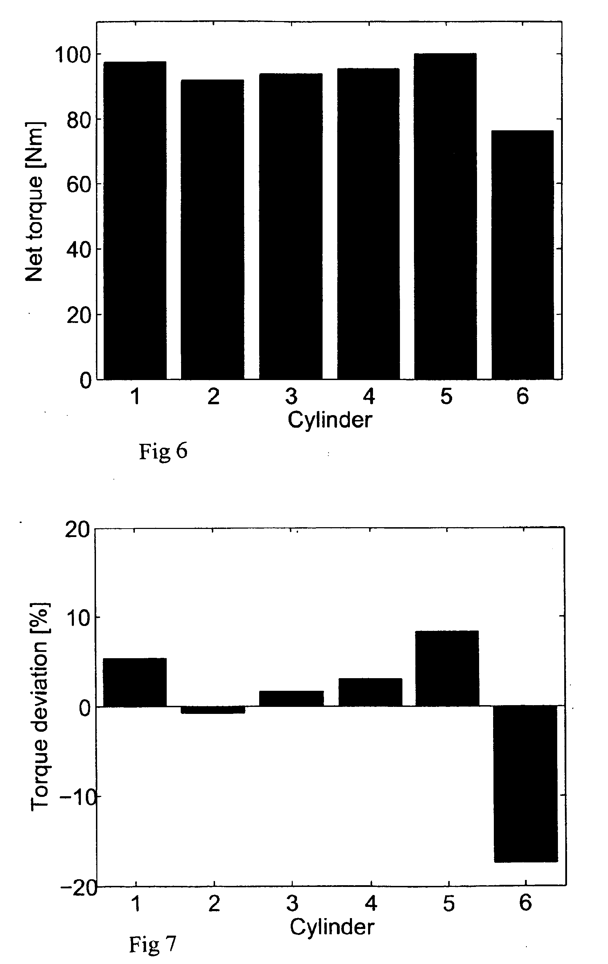

A set of test data as to the engine speed as a function of time during the decrease of the engine speed from an upper engine speed to a lower engine speed in step 1 B of a first test cycle is visualized as a graph in Fig 3, whereas a set of test data as to the engine speed as a function of time during the decrease of the engine speed from an upper engine speed to a lower engine speed in step 2B of an associated second test cycle is visualized as a graph in Fig 4. In the illustrated example, the upper engine speed is 2000 rpm and the lower engine speed 800 rpm in the first test cycle as well as in the second test cycle. A first set of comparison data established in the above-mentioned manner based on the set of test data of Fig 3 and a second set of comparison data established in the above-mentioned manner based on the set of test data of Fig 4 are visualized as graphs in Fig 5, where the dotted line represents the first set of comparison data and the broken line represents the second set of comparison data. The difference between the second and first set of comparison data is indicated by the continuous line in Fig 5. This difference represents the torque exerted by the test cylinder during step 2B of the second test cycle. A test value may then be established by forming the average or a weighted average of this difference over the engine speed interval between the upper engine speed and the lower engine speed. Such test values for all the cylinders of a six-cylinder engine are indicated by the bars in the bar diagram of Fig 6, where each bar represents the magnitude of the test value for an individual cylinder and consequently the contribution in torque from the cylinder. The deviation of the test value for each one of said cylinders from the average of the test values for all six cylinders are indicated by the bars in the bar diagram of Fig 7. It clearly appears from Fig 7 that the test value for cylinder No. 6 deviates substantially from the other test values, which indicates that this cylinder could be malfunctioning.

Steps S4-S6 may be repeated several times for one and the same cylinder in order to establish a mean test value for the cylinder, which will be statistically more accurate as compared to a single execution of steps S4-S6 for an individual cylinder. If steps S4-S6 are repeated a large number of times, it could be appropriate to monitor the engine temperature and temporarily interrupt the test sequence after an execution of steps S4-S6 if the increase of the engine temperature during the test sequence is above a maximum allowed value so as to allow the engine temperature to decrease before the next repetition of steps S4-S6.

Computer program code for implementing a method according to the invention is suitably included in a computer program, which is loadable into the internal memory of a computer, such as the internal memory of an external computer 10 or the internal memory of an electronic control unit of the appliance 2. Such a computer program is suitably provided via a computer program product 12 comprising a data storage medium readable by a computer, which data storage medium has the computer program stored thereon. Said data storage medium is for instance an optical data storage medium in the form of a CD-ROM disc, a DVD disc etc, a magnetic data storage medium in the form of a hard disc, a diskette, a cassette tape etc, or a memory of the type ROM, PROM, EPROM or EEPROM or a Flash memory.

A computer program product according to an embodiment of the invention comprises computer program code for causing an engine control unit or another computer connected to the engine control unit:

- to perform a first test cycle involving the following test cycle steps:

1A) acceleration of the engine to an upper engine speed,

1 B) interruption of the fuel supply to all the cylinders of the engine so as to allow the engine speed to decrease from the upper engine speed to a lower engine speed,

1 C) recording of a first set of test data as to the engine speed as a function of time during the decrease of the engine speed from the upper engine speed to the lower engine speed in step 1 B,

1 D) processing of the recorded first set of test data so as to establish a first set of comparison data representing the retarding torque of the engine during the decrease of the engine speed from the upper engine speed to the lower engine speed in step 1B;

- to perform a second test cycle involving the execution of the following test cycle steps:

2A) acceleration of the engine to an upper engine speed,

2B) interruption of the fuel supply to all the cylinders of the engine except one individual cylinder, here denominated test cylinder, so as to allow the engine speed to decrease from the upper engine speed to a lower engine speed while maintaining supply of a given fuel quantity to the test cylinder,

2C) recording of a second set of test data as to the engine speed as a function of time during the decrease of the engine speed from the upper engine speed to the lower engine speed in step 2B,

2D) processing of the recorded second set of test data in the same manner as the first set of test data so as to establish a second set of comparison data representing the retarding torque of the engine during the decrease of the engine speed from the upper engine speed to the lower engine speed in step 2B;

- to compare the second set of comparison data with the first set of comparison data so as to establish a test value representing the torque exerted by the test cylinder during step 2B; and
- to use the test value for establishing whether the test cylinder is malfunctioning or not.

Fig 2 very schematically illustrates a computer 10 comprising an execution means 31, such as a central processing unit (CPU), for executing computer software. The execution means 31 communicates with a memory 33, for instance of the type RAM, via a data bus 32. The computer 10 also comprises data storage medium 34, for instance in the form of a memory of the type ROM, PROM, EPROM or EEPROM or a Flash memory. The execution means 31 communicates with the data storage medium 34 via the data bus 32. A computer program comprising computer program code for implementing a method according to the invention is stored on the data storage medium 34.

The invention is of course not in any way restricted to the embodiments described above.

**Claims**

1. A method for identifying a malfunctioning cylinder of a multicylinder combustion engine (1), wherein the method comprises the steps of:

    - performing a first test cycle involving the execution of the following test cycle steps:

        1A) acceleration of the engine (1) to an upper engine speed,

        1B) interruption of the fuel supply to all the cylinders (3a-3f) of the engine (1) so as to allow the engine speed to decrease from the upper engine speed to a lower engine speed,

        1C) recording of a first set of test data as to the engine speed as a function of time during the decrease of the engine speed from the upper engine speed to the lower engine speed in step 1 B,

        1D) processing of the recorded first set of test data so as to establish a first set of comparison data representing the retarding torque of the engine (1) during the decrease of the engine speed from the upper engine speed to the lower engine speed in step 1B;

    - performing a second test cycle involving the execution of the following test cycle steps:

        2A) acceleration of the engine (1) to an upper engine speed,

        2B) interruption of the fuel supply to all the cylinders of the engine (1) except one individual cylinder, here denominated test cylinder, so as to allow the engine speed to decrease from the upper engine speed to a lower engine speed while maintaining supply of a given fuel quantity to the test cylinder,

        2C) recording of a second set of test data as to the engine speed as a function of time during the decrease of the engine speed from the upper engine speed to the lower engine speed in step 2B,

        2D) processing of the recorded second set of test data in the same manner as the first set of test data so as to establish a second set of comparison data representing the retarding torque of the engine (1) during the decrease of the engine speed from the upper engine speed to the lower engine speed in step 2B;

- comparing the second set of comparison data with the first set of comparison data so as to establish a test value representing the torque exerted by the test cylinder during step 2B; and
- using the test value for establishing whether the test cylinder is malfunctioning or not.

2. A method according to claim 1, **characterized in:**

- **that** the first set of comparison data is established so as to represent the retarding torque of the engine (1) as a function of engine speed during step 1B; and
- **that** the second set of comparison data is established so as to represent the retarding torque of the engine (1) as a function of engine speed during step 2B.

3. A method according to claim 2, **characterized in that** the test value is established by forming the difference between the second set of comparison data and the first set of comparison data as a function of engine speed and then forming the average or a weighted average of this difference over the entire or a given part of the engine speed interval between the upper engine speed and the lower engine speed.

4. A method according to any of claims 1-3, **characterized in that** the engine (1) in step 2A is accelerated to an upper engine speed which is equal or at least essentially equal to the upper engine speed used in step 1A.

5. A method according to any of claims 1-4, **characterized in that** the engine speed in step 2B is allowed to decrease to a lower engine speed which is equal or at least essentially equal to the lower engine speed used in step 1 B.

6. A method according to any of claims 1-5, **characterized in that** a test sequence comprising said first test cycle and said second test cycle is carried out separately for each individual cylinder of the engine (1), with the same or at least essentially the same test conditions and with the same on-time applied to the test cylinder in step 2B in each test sequence, so as to establish a separate test value for each individual cylinder of the engine (1), and that the test values for the cylinders (3a-3f) are mutually compared in order to establish whether any of the cylinders is malfunctioning.

7. A method according to claim 6, **characterized in that** the test values for the cylinders (3a-3f) are mutually compared by establishing the deviation of the test value for an individual cylinder from the average of the test values for all the cylinders of the engine (1).

8. A method according to claim 7, **characterized in that** the deviation of the test value for an individual cylinder from the average of the test values for all the cylinders (3a-3f) of the engine (1) is compared with a given deviation value representing an allowed deviation for a properly functioning cylinder.

9. A method according to any of claims 1-8, **characterized in:**

- **that** the first set of test data is used for establishing a first set of derivative data as to the derivative of the engine speed as a function of engine speed during step 1 B, the first set of comparison data being established based on this first set of derivative data; and
- **that** the second set of test data is used for establishing a second set of derivative data as to the derivative of the engine speed as a function of engine speed during step 2B, the second set of comparison data being established based on this second set of derivative data.

10. A method according to claim 9, **characterized in:**

- **that** the first set of comparison data is established based on the first set of derivative data by multiplying the derivative of the engine speed by a moment of inertia value representing the moment of inertia of the parts of the engine and the associated driveline that are rotating during the execution of the first and second test cycles; and
- **that** the second set of comparison data is established based on the second set of derivative data by multiplying the derivative of the engine speed by the moment of inertia value.

11. A computer program product for identifying a malfunctioning cylinder of a multicylinder combustion engine, the computer program product comprising computer program code for causing an engine control unit or another computer connected to the engine control unit:

- to perform a first test cycle involving the following test cycle steps:

1A) acceleration of the engine to an upper engine speed,

1B) interruption of the fuel supply to all the cylinders of the engine so as to allow the engine speed to decrease from the upper engine speed to a lower engine speed,

1C) recording of a first set of test data as to the engine speed as a function of time during the decrease of the engine speed from the upper engine speed to the lower engine speed in step 1 B,

1D) processing of the recorded first set of test data so as to establish a first set of comparison data representing the retarding torque of the engine during the decrease of the engine speed from the upper engine speed to the lower engine speed in step 1B;

- to perform a second test cycle involving the execution of the following test cycle steps:

2A) acceleration of the engine to an upper engine speed,

2B) interruption of the fuel supply to all the cylinders of the engine except one individual cylinder, here denominated test cylinder, so as to allow the engine speed to decrease from the upper engine speed to a lower engine speed while maintaining supply of a given fuel quantity to the test cylinder,

2C) recording of a second set of test data as to the engine speed as a function of time during the decrease of the engine speed from the upper engine speed to the lower engine speed in step 2B,

2D) processing of the recorded second set of test data in the same manner as the first set of test data so as to establish a second set of comparison data representing the retarding torque of the engine during the decrease of the engine speed from the upper engine speed to the lower engine speed in step 2B;

- to compare the second set of comparison data with the first set of comparison data so as to establish a test value representing the torque exerted by the test cylinder during step 2B; and

- to use the test value for establishing whether the test cylinder is malfunctioning or not.

12. A computer program product according to claim 11, **characterized** **in that** the computer program product comprises computer program code for causing the engine control unit or another computer connected to the engine control unit:

- to establish the first set of comparison data so as to represent the retarding torque of the engine as a function of engine speed during step 1B; and

- to establish the second set of comparison data so as to represent the retarding torque of the engine as a function of engine speed during step 2B.

13. A computer program product according to claim 12, **characterized** **in that** the computer program product comprises computer program code for causing the engine control unit or another computer connected to the engine control unit to establish the test value by forming the difference between the second set of comparison data and the first set of comparison data as a function of engine speed and then forming the average or a weighted average of this difference over the entire or a given part of the engine speed interval between the upper engine speed and the lower engine speed.

14. A computer program product according to any of claims 11-13, **characterized** **in that** the computer program product comprises computer program code for causing the engine control unit or another computer connected to the engine control unit:

- to perform a test sequence, comprising said first test cycle and said second test cycle, separately for each individual cylinder of the engine, with the same or at least essentially the same test conditions and with the same on-time applied to the test cylinder in step 2B in each test sequence, so as to establish a separate test value for each individual cylinder of the engine; and

- to mutually compare the test values for the cylinders in order to establish whether any of the cylinders is malfunctioning.

15. A computer program product according to claim 14, **characterized** **in that** the computer program product comprises computer program code for causing the engine control unit or another computer connected to the engine control unit to mutually compare the test values for the cylinders by establishing the deviation of the test value for an individual cylinder from the average of the test values for all the cylinders of the engine.

16. A computer program product according to claim 15, **characterized** **in that** the computer program product comprises computer program code for causing the engine control unit or another computer connected to the engine control unit to compare the deviation of the test value for an individual cylinder from the average of the test values for all the cylinders of the engine with a given deviation value representing an allowed deviation for a properly functioning cylinder.

**17.** A computer program product according to any of claims 11-16, **characterized** **in that** the computer program product comprises computer program code for causing the engine control unit or another computer connected to the engine control unit:

- to use the first set of test data for establishing a first set of derivative data as to the derivative of the engine speed as a function of engine speed during step 1B;
- to establish the first set of comparison data based on this first set of derivative data;
- to use the second set of test data for establishing a second set of derivative data as to the derivative of the engine speed as a function of engine speed during step 2B; and
- to establish the second set of comparison data based on this second set of derivative data.

**18.** A computer program product according to claim 17, **characterized** **in that** the computer program product comprises computer program code for causing the engine control unit or another computer connected to the engine control unit:

- to establish the first set of comparison data based on the first set of derivative data by multiplying the derivative of the engine speed by a moment of inertia value representing the moment of inertia of the parts of the engine and the associated driveline that are rotating during the execution of the first and second test cycles; and
- to establish the second set of comparison data based on the second set of derivative data by multiplying the derivative of the engine speed by the moment of inertia value.

**19.** A computer program product according to any of claims 11-18, **characterized** **in that** the computer program product comprises a data storage medium (34), which is readable by an electronic control unit (30) and which has said computer program code stored thereon.

**20.** A computer, such as an electronic control unit (4) of a motor vehicle or a vehicle external computer (10), comprising an execution means (31), a memory (33) connected to the execution means and a data storage medium (34) connected to the execution means, wherein the computer program code of a computer program product according to any of claims 11-19 is stored on said data storage medium (34).

**Patentansprüche**

**1.** Verfahren zum Erkennen eines defekten Zylinders eines mehrzylindrigen Verbrennungsmotors (1), wobei das Verfahren die Schritte umfasst, dass:

- ein erster Testzyklus durchgeführt wird, der die Ausführung der folgenden Testzyklusschritte umfasst:

1A) Beschleunigung des Motors (1) auf eine obere Motordrehzahl,
1B) Unterbrechung der Kraftzufuhr zu allen Zylindern (3a - 3f) des Motors (1), um zuzulassen, dass die Motordrehzahl von der oberen Motordrehzahl auf eine untere Motordrehzahl abnimmt,
1C) Aufzeichnen eines ersten Satzes Testdaten hinsichtlich der Motordrehzahl als eine Funktion der Zeit während der Abnahme der Motordrehzahl von der oberen Motordrehzahl auf die untere Motordrehzahl in Schritt 1B,
1D) Verarbeiten des aufgezeichneten ersten Satzes Testdaten, um einen ersten Satz Vergleichsdaten festzulegen, der das Bremsmoment des Motors (1) während der Abnahme der Motordrehzahl von der oberen Motordrehzahl auf die untere Motordrehzahl in Schritt 1B darstellt;

- ein zweiter Testzyklus durchgeführt wird, der die Ausführung der folgenden Testzyklusschritte umfasst:

2A) Beschleunigung des Motors (1) auf eine obere Motordrehzahl,
2B) Unterbrechung der Kraftstoffversorgung zu allen Zylindern des Motors (1) mit der Ausnahme eines einzelnen Zylinders, der hier als Testzylinder bezeichnet wird, um zuzulassen, dass die Motordrehzahl von der oberen Motordrehzahl auf eine untere Motordrehzahl abnimmt, während die Zufuhr einer gegebenen Kraftstoffmenge zu dem Testzylinder aufrecht erhalten wird,
2C) Aufzeichnen eines zweiten Satzes Testdaten hinsichtlich der Motordrehzahl als eine Funktion der Zeit während der Abnahme der Motordrehzahl von der oberen Motordrehzahl auf die untere Motordrehzahl in Schritt 2B,
2D) Verarbeiten des aufgezeichneten zweiten Satzes Testdaten auf die gleiche Weise wie des ersten Satzes Testdaten, um einen zweiten Satz Vergleichsdaten festzulegen, der das Bremsmoment des Motors (1) während der Abnahme der Motordrehzahl von der oberen Motordrehzahl auf die untere Motordrehzahl in Schritt 2B darstellt;

- Vergleichen des zweiten Satzes Vergleichsdaten mit dem ersten Satz Vergleichsdaten, um einen Testwert festzulegen, der das Drehmoment darstellt, das von dem Testzylinder während des Schrittes 2B ausgeübt wird; und
- Verwenden des Testwertes zum Festlegen, ob der Testzylinder defekt ist oder nicht.

2.  Verfahren nach Anspruch 1,
    **dadurch gekennzeichnet**

    - **dass** der erste Satz Vergleichsdaten derart festgelegt wird, dass er ein Bremsmoment des Motors (1) als eine Funktion der Motordrehzahl während des Schrittes 1B darstellt; und
    - **dass** der zweite Satz Vergleichsdaten derart festgelegt wird, dass er das Bremsmoment des Motors (1) als eine Funktion der Motordrehzahl während des Schrittes 2B darstellt.

3.  Verfahren nach Anspruch 2,
    **dadurch gekennzeichnet, dass**
    der Testwert festgelegt wird, indem die Differenz zwischen dem zweiten Satz Vergleichsdaten und dem ersten Satz Vergleichsdaten als eine Funktion der Motordrehzahl gebildet wird, und anschließend der Mittelwert oder ein gewichteter Mittelwert dieser Differenz über das gesamte oder einen gegebenen Teil des Motordrehzahlintervalls zwischen der oberen Motordrehzahl und der unteren Motordrehzahl gebildet wird.

4.  Verfahren nach einem der Ansprüche 1 - 3,
    **dadurch gekennzeichnet, dass**
    der Motor (1) in Schritt 2A auf eine obere Motordrehzahl beschleunigt wird, die gleich oder zumindest im Wesentlichen gleich der oberen Motordrehzahl ist, die in Schritt 1A verwendet wird.

5.  Verfahren nach einem der Ansprüche 1 - 4,
    **dadurch gekennzeichnet, dass**
    zugelassen wird, dass die Motordrehzahl in Schritt 2B auf eine untere Motordrehzahl abnimmt, die gleich oder zumindest im Wesentlichen gleich der unteren Motordrehzahl ist, die in Schritt 1B verwendet wird.

6.  Verfahren nach einem der Ansprüche 1 - 5,
    **dadurch gekennzeichnet, dass**
    eine Testfolge, die den ersten Testzyklus und den zweiten Testzyklus umfasst, getrennt für jeden einzelnen Zylinder des Motors (1) ausgeführt wird, wobei die gleichen oder zumindest im Wesentlichen die gleichen Testbedingungen vorliegen und wobei die gleiche Ein-Zeit, auf den Testzylinder in Schritt 2B in jeder Testfolge angewandt wird, um einen separaten Testwert für jeden einzelnen Zylinder des Motors (1) festzulegen, und dass die Testwerte für die Zylinder (3a - 3f) wechselseitig verglichen werden, um festzulegen, ob irgendeiner der Testzylinder defekt ist.

7.  Verfahren nach Anspruch 6,
    **dadurch gekennzeichnet, dass**
    die Testwerte für die Zylinder (3a - 3f) wechselseitig verglichen werden, indem die Abweichung des Testwertes für einen einzelnen Zylinder von dem Mittelwert der Testwerte für alle Zylinder des Motors (1) festgelegt wird.

8.  Verfahren nach Anspruch 7,
    **dadurch gekennzeichnet, dass**
    die Abweichung des Testwertes für einen einzelnen Zylinder von dem Mittelwert der Testwerte für alle Zylinder (3a - 3f) des Motors (1) mit einem gegebenen Abweichungswert verglichen wird, der eine zulässige Abweichung für einen richtig arbeitenden Zylinder darstellt.

9.  Verfahren nach einem der Ansprüche 1 - 8,
    **dadurch gekennzeichnet:**

    - **dass** der erste Satz Testdaten zum Festlegen eines ersten Satzes von Ableitungsdaten hinsichtlich der Ableitung der Motordrehzahl als eine Funktion der Motordrehzahl während des Schrittes 1B verwendet wird, wobei der erste Satz Vergleichsdaten auf der Basis dieses ersten Satzes Ableitungsdaten festgelegt wird; und
    - **dass** der zweite Satz Testdaten zum Festlegen eines zweiten Satzes Ableitungsdaten hinsichtlich der Ableitung der Motordrehzahl als eine Funktion der Motordrehzahl während des Schrittes 2B verwendet wird, wobei der zweite Satz Vergleichsdaten auf der Basis dieses zweiten Satzes Ableitungsdaten festgelegt wird.

10. Verfahren nach Anspruch 9,
    **dadurch gekennzeichnet:**

    - **dass** der erste Satz Vergleichsdaten auf der Basis des ersten Satzes Ableitungsdaten festgelegt wird, indem die Ableitung der Motordrehzahl mit einem Trägheitsmomentwert multipliziert wird, der das Trägheitsmoment der Teile des Motors und des zugehörigen Triebstrangs darstellt, die während der Ausführung des ersten und zweiten Testzyklus rotieren; und
    - **dass** der zweite Satz Vergleichsdaten auf der Basis des zweiten Satzes Ableitungsdaten festgelegt wird, indem die Ableitung der Motordrehzahl mit dem Trägheitsmomentwert multipliziert wird.

11. Computerprogrammprodukt zum Erkennen eines defekten Zylinders eines mehrzylindrigen Verbrennungsmotors, wobei das Computerprogrammprodukt Computerprogrammcode umfasst, um zu bewirken, dass eine Motorsteuereinheit oder ein anderer Computer, der mit der Motorsteuereinheit verbunden ist:

- einen ersten Testzyklus durchführt, der die folgenden Testzyklusschritte umfasst:

1A) Beschleunigung des Motors auf eine obere Motordrehzahl,
1B) Unterbrechung der Kraftzufuhr zu allen Zylindern des Motors,
um zuzulassen, dass die Motordrehzahl von der oberen Motordrehzahl auf eine untere Motordrehzahl abnimmt,
1C) Aufzeichnen eines ersten Satzes Testdaten hinsichtlich der Motordrehzahl als eine Funktion der Zeit während der Abnahme der Motordrehzahl von der oberen Motordrehzahl auf die untere Motordrehzahl in Schritt 1B,
1D) Verarbeiten des aufgezeichneten ersten Satzes Testdaten, um einen ersten Satz Vergleichsdaten festzulegen, der das Bremsmoment des Motors während der Abnahme der Motordrehzahl von der oberen Motordrehzahl auf die untere Motordrehzahl in Schritt 1B darstellt;

- einen zweiten Testzyklus durchführt, der die Ausführung der folgenden Testzyklusschritte umfasst:

2A) Beschleunigung des Motors auf eine obere Motordrehzahl,
2B) Unterbrechung der Kraftstoffzufuhr zu allen Zylindern des Motors mit der Ausnahme eines einzelnen Zylinders, der hier als Testzylinder bezeichnet wird, um zuzulassen, dass die Motordrehzahl von der oberen Motordrehzahl auf eine untere Motordrehzahl abnimmt, während die Zufuhr einer gegebenen Kraftstoffmenge zu dem Testzylinder aufrecht erhalten wird,
2C) Aufzeichnen eines zweiten Satzes Testdaten hinsichtlich der Motordrehzahl als eine Funktion der Zeit während der Abnahme der Motordrehzahl von der oberen Motordrehzahl auf die untere Motordrehzahl in Schritt 2B,
2D) Verarbeiten des aufgezeichneten zweiten Satzes Testdaten auf die gleiche Weise wie des ersten Satzes Testdaten, um einen zweiten Satz Vergleichsdaten festzulegen, der das Bremsmoment des Motors während der Abnahme der Motordrehzahl von der oberen Motordrehzahl auf die untere Motordrehzahl in Schritt 2B darstellt;

- Vergleichen des zweiten Satzes Vergleichsdaten mit dem ersten Satz Vergleichsdaten, um einen Testwert festzulegen, der das Drehmoment darstellt, das von dem Testzylinder während des Schrittes 2B ausgeübt wird; und
- Verwenden des Testwertes zum Festlegen, ob der Testzylinder defekt ist oder nicht.

12. Computerprogrammprodukt nach Anspruch 11, **dadurch gekennzeichnet, dass** das Computerprogrammprodukt Computerprogrammcode umfasst, um zu bewirken, dass die Motorsteuereinheit oder ein anderer Computer, der mit der Motorsteuereinheit verbunden ist:

- den ersten Satz Vergleichsdaten festlegt, um das Bremsmoment des Motors als eine Funktion der Motordrehzahl während des Schrittes 1B darzustellen; und
- den zweiten Satz Vergleichsdaten festlegt, um das Bremsmoment des Motors als eine Funktion der Motordrehzahl während des Schrittes 2B darzustellen.

13. Computerprogrammprodukt nach Anspruch 12, **dadurch gekennzeichnet, dass** das Computerprogrammprodukt Computerprogrammcode umfasst, um zu bewirken, dass die Motorsteuereinheit oder ein anderer Computer, der mit der Motorsteuereinheit verbunden ist, den Testwert festlegt, indem die Differenz zwischen dem zweiten Satz Vergleichsdaten und dem ersten Satz Vergleichsdaten als eine Funktion der Motordrehzahl gebildet wird, und anschließend der Mittelwert oder ein gewichteter Mittelwert dieser Differenz über das gesamte oder einen gegebenen Teil des Motordrehzahlintervalls zwischen der oberen Motordrehzahl und der unteren Motordrehzahl gebildet wird.

14. Computerprogrammprodukt nach einem der Ansprüche 11 - 13, **dadurch gekennzeichnet, dass** das Computerprogrammprodukt Computerprogrammcode umfasst, um zu bewirken, dass die Motorsteuereinheit oder ein anderer Computer, der mit der Motorsteuereinheit verbunden ist:

- eine Testfolge, die den ersten Testzyklus und den zweiten Testzyklus umfasst, getrennt für jeden einzelnen Zylinder des Motors durchführt, wobei die gleichen oder zumindest im Wesentlichen die gleichen Testbedingungen und die gleiche Ein-Zeit auf den Testzylinder in Schritt 2B in jeder Testfolge angewandt werden, um einen separaten Testwert für jeden einzelnen Zylinder des Motors festzulegen; und

- die Testwerte für die Zylinder wechselseitig vergleicht, um festzulegen, ob irgendeiner der Zylinder defekt ist.

15. Computerprogrammprodukt nach Anspruch 14, **dadurch gekennzeichnet, dass** das Computerprogrammprodukt Computerprogrammcode umfasst, um zu bewirken, dass die Motorsteuereinheit oder ein anderer Computer, der mit der Motorsteuereinheit verbunden ist, die Testwerte für die Zylinder wechselseitig vergleicht, indem die Abweichung des Testwertes für einen einzelnen Zylinder von dem Mittelwert der Testwerte für alle Zylinder des Motors festgelegt wird.

16. Computerprogrammprodukt nach Anspruch 15, **dadurch gekennzeichnet, dass** das Computerprogrammprodukt Computerprogrammcode umfasst, um zu bewirken, dass die Motorsteuereinheit oder ein anderer Computer, der mit der Motorsteuereinheit verbunden ist, die Abweichung des Testwertes für einen einzelnen Zylinder von dem Mittelwert der Testwerte für alle Zylinder des Motors mit einem gegebenen Abweichungswert vergleicht, der eine zulässige Abweichung für einen richtig arbeitenden Zylinder darstellt.

17. Computerprogrammprodukt nach einem der Ansprüche 11 - 16, **dadurch gekennzeichnet, dass** das Computerprogrammprodukt Computerprogrammcode umfasst, um zu bewirken, dass die Motorsteuereinheit oder ein anderer Computer, der mit der Motorsteuereinheit verbunden ist:

   - den ersten Satz Testdaten zum Festlegen eines ersten Satzes Ableitungsdaten hinsichtlich der Ableitung der Motordrehzahl als eine Funktion der Motordrehzahl während des Schrittes 1B verwendet;
   - den ersten Satz Vergleichsdaten auf der Basis dieses ersten Satzes Ableitungsdaten festlegt;
   - den zweiten Satz Testdaten zum Festlegen eines zweiten Satzes Ableitungsdaten hinsichtlich der Ableitung der Motordrehzahl als eine Funktion der Motordrehzahl während des Schrittes 2B verwendet; und
   - den zweiten Satz Vergleichsdaten auf der Basis dieses zweiten Satzes Ableitungsdaten festlegt.

18. Computerprogrammprodukt nach Anspruch 17, **dadurch gekennzeichnet, dass** das Computerprogrammprodukt Computerprogrammcode umfasst, um zu bewirken, dass die Motorsteuereinheit oder ein anderer Computer, der mit der Motorsteuereinheit verbunden ist:

   - den ersten Satz Vergleichsdaten auf der Basis des ersten Satzes Ableitungsdaten festlegt, indem die Ableitung der Motordrehzahl mit einem Trägheitsmomentwert multipliziert wird, der das Trägheitsmoment der Teile des Motors und des zugehörigen Triebstrangs darstellt, die während der Ausführung des ersten und zweiten Testzyklus rotieren; und
   - den zweiten Satz Vergleichsdaten auf der Basis des zweiten Satzes Ableitungsdaten festlegt, indem die Ableitung der Motordrehzahl mit dem Trägheitsmomentwert multipliziert wird.

19. Computerprogrammprodukt nach einem der Ansprüche 11 - 18, **dadurch gekennzeichnet, dass** das Computerprogrammprodukt ein Datenspeichermedium (34) umfasst, das von einer elektronischen Steuereinheit (30) lesbar ist, und in dem der Computerprogrammcode gespeichert ist.

20. Computer, wie etwa eine elektronische Steuereinheit (4) eines Kraftfahrzeugs oder ein Computer (10) außerhalb eines Fahrzeugs, mit einem Ausführungsmittel (31), einem Speicher (33), der mit dem Ausführungsmittel verbunden ist, und einem Datenspeichermedium (34), das mit dem Ausführungsmittel verbunden ist, wobei der Computerprogrammcode eines Computerprogrammprodukts nach einem der Ansprüche 11 - 19 auf dem Datenspeichermedium (34) gespeichert ist.

**Revendications**

1. Procédé pour identifier un cylindre fonctionnant incorrectement dans un moteur à combustion multicylindre (1), le procédé comportant les étapes consistant à :

   - exécuter un premier cycle de test impliquant l'exécution des étapes de cycle de test suivantes :

      1A) accélération du moteur (1) jusqu'à un régime moteur supérieur,
      1B) interruption de l'alimentation en carburant de tous les cylindres (3a-3f) du moteur (1) de manière à permettre au régime moteur de baisser du régime moteur supérieur à un régime moteur inférieur,
      1C) enregistrement d'un premier ensemble de données de test concernant le régime moteur en fonction du temps pendant la baisse du régime moteur du régime moteur supérieur au régime moteur inférieur à l'étape 1B,
      1D) traitement du premier ensemble enregistré de données de test de manière à établir un premier ensemble de données de comparaison représentant le couple de ralentissement du moteur (1) pendant la baisse du régime moteur du régime moteur supérieur au régime moteur inférieur à l'étape 1B,

- exécuter un second cycle de test impliquant l'exécution des étapes de cycle de test suivantes :

2A) accélération du moteur (1) jusqu'à un régime moteur supérieur,

2B) interruption de l'alimentation en carburant de tous les cylindres du moteur (1) à l'exception d'un cylindre individuel, ici appelé cylindre de test, de manière à permettre au régime moteur de baisser du régime moteur supérieur à un régime moteur inférieur tout en maintenant la fourniture d'une quantité donnée de carburant au cylindre de test,

2C) enregistrement d'un second ensemble de données de test concernant le régime moteur en fonction du temps pendant la baisse du régime moteur du régime moteur supérieur au régime moteur inférieur à l'étape 2B,

2D) traitement du second ensemble enregistré de données de test de la même manière que le premier ensemble de données de test de manière à établir un second ensemble de données de comparaison représentant le couple de ralentissement du moteur (1) pendant la baisse du régime moteur du régime moteur supérieur au régime moteur inférieur à l'étape 2B,

- comparer le second ensemble de données de comparaison avec le premier ensemble de données de comparaison de manière à établir une valeur de test représentant le couple exercé par le cylindre de test pendant l'étape 2B, et

- utiliser la valeur de test pour établir si oui ou non le cylindre de test fonctionne incorrectement.

**2.** Procédé selon la revendication 1, **caractérisé en ce que** :

- le premier ensemble de données de comparaison est établi de manière à représenter le couple de ralentissement du moteur (1) en fonction du régime moteur pendant l'étape 1B, et

- le second ensemble de données de comparaison est établi de manière à représenter le couple de ralentissement du moteur (1) en fonction du régime moteur pendant l'étape 2B.

**3.** Procédé selon la revendication 2, **caractérisé en ce que** la valeur de test est établie en formant la différence entre le second ensemble de données de comparaison et le premier ensemble de données de comparaison en fonction du régime moteur, et en formant ensuite la moyenne ou une moyenne pondérée de cette différence sur la totalité ou une partie donnée de l'intervalle de régime moteur entre le régime moteur supérieur et le régime moteur inférieur.

**4.** Procédé selon l'une quelconque des revendications 1-3, **caractérisé en ce que** le moteur (1) à l'étape 2A est accéléré jusqu'à un régime moteur supérieur qui est égal ou au moins sensiblement égal au régime moteur supérieur utilisé à l'étape 1A.

**5.** Procédé selon l'une quelconque des revendications 1-4, **caractérisé en ce qu'**on laisse le régime moteur à l'étape 2B baisser jusqu'à régime moteur inférieur qui est égal ou au moins sensiblement égal au régime moteur inférieur utilisé à l'étape 1B.

**6.** Procédé selon l'une quelconque des revendications 1-5, **caractérisé en ce qu'**une séquence de test comportant ledit premier cycle de test et ledit second cycle de test est exécutée séparément pour chaque cylindre individuel du moteur (1), avec les mêmes conditions de test ou au moins des conditions de test sensiblement identiques, et avec le même temps d'alimentation appliqué au cylindre de test à l'étape 2B dans chaque séquence de test, de manière à établir une valeur de test séparée pour chaque cylindre individuel du moteur (1), et que les valeurs de test pour les cylindres (3a à 3f) sont mutuellement comparées afin d'établir si l'un quelconque des cylindres fonctionne incorrectement.

**7.** Procédé selon la revendication 6, **caractérisé en ce que** les valeurs de test pour les cylindres (3a-3f) sont mutuellement comparées en établissant l'écart de la valeur de test pour un cylindre individuel par rapport à la moyenne des valeurs de test pour tous les cylindres du moteur (1).

**8.** Procédé selon la revendication 7, **caractérisé en ce que** l'écart de la valeur de test pour un cylindre individuel par rapport à la moyenne des valeurs de test pour tous les cylindres (3a-3f) du moteur (1) est comparé à une valeur d'écart donnée représentant un écart autorisé pour un cylindre fonctionnant correctement.

**9.** Procédé selon l'une quelconque des revendications 1-8, **caractérisé en ce que** :

- le premier ensemble de données de test est utilisé pour établir un premier ensemble de données de dérivée concernant la dérivée du régime moteur en fonction du régime moteur pendant l'étape 1B, le premier ensemble de données de comparaison étant établi sur la base de ce premier ensemble de données de dérivée, et
- le second ensemble de données de test est utilisé pour établir un second ensemble de données de dérivée concernant la dérivée du régime moteur en fonction du régime moteur pendant l'étape 2B, le second ensemble de données de comparaison étant établi sur la base de ce second ensemble de données de dérivée.

**10.** Procédé selon la revendication 9, **caractérisé en ce que :**

- le premier ensemble de données de comparaison est établi sur la base du premier ensemble de données de dérivée en multipliant la dérivée du régime moteur par une valeur de moment d'inertie représentant le moment d'inertie des pièces du moteur et la transmission associée qui sont en rotation pendant l'exécution des premier et second cycles de test, et
- le second ensemble de données de comparaison est établi sur la base du second ensemble de données de dérivée en multipliant la dérivée du régime moteur par la valeur de moment d'inertie.

**11.** Produit de programme informatique pour identifier un cylindre fonctionnant incorrectement dans un moteur à combustion multicylindre, le produit de programme informatique comportant un code de programme informatique pour amener une unité de commande de moteur ou un autre ordinateur relié à l'unité de commande de moteur à :

- exécuter un premier cycle de test impliquant les étapes de cycle de test suivantes :

1A) accélération du moteur jusqu'à un régime moteur supérieur,
1B) interruption de l'alimentation en carburant de tous les cylindres du moteur de manière à permettre au régime moteur de baisser du régime moteur supérieur à un régime moteur inférieur,
1C) enregistrement d'un premier ensemble de données de test concernant le régime moteur en fonction du temps pendant la baisse du régime moteur du régime moteur supérieur au régime moteur inférieur à l'étape 1B,
1D) traitement du premier ensemble enregistré de données de test de manière à établir un premier ensemble de données de comparaison représentant le couple de ralentissement du moteur pendant la baisse du régime moteur du régime moteur supérieur au régime moteur inférieur à l'étape 1B,

- exécuter un second cycle de test impliquant l'exécution des étapes de cycle de test suivantes :

2A) accélération du moteur jusqu'à un régime moteur supérieur,
2B) interruption de l'alimentation en carburant de tous les cylindres du moteur à l'exception d'un cylindre individuel, ici appelé cylindre de test, de manière à permettre au régime moteur de baisser du régime moteur supérieur à un régime moteur inférieur tout en maintenant la fourniture d'une quantité donnée de carburant au cylindre de test,
2C) enregistrement d'un second ensemble de données de test concernant le régime moteur en fonction du temps pendant la baisse du régime moteur du régime moteur supérieur au régime moteur inférieur à l'étape 2B,
2D) traitement du second ensemble enregistré de données de test de la même manière que le premier ensemble de données de test de manière à établir un second ensemble de données de comparaison représentant le couple de ralentissement du moteur pendant la baisse du régime moteur du régime moteur supérieur au régime moteur inférieur à l'étape 2B,

- comparer le second ensemble de données de comparaison avec le premier ensemble de données de comparaison de manière à établir une valeur de test représentant le couple exercé par le cylindre de test pendant l'étape 2B, et
- utiliser la valeur de test pour établir si oui ou non le cylindre de test fonctionne incorrectement.

**12.** Produit de programme informatique selon la revendication 11, **caractérisé en ce que** le produit de programme informatique comporte un code de programme informatique pour amener l'unité de commande de moteur ou un autre ordinateur relié à l'unité de commande de moteur à :

- établir le premier ensemble de données de comparaison de manière à représenter le couple de ralentissement du moteur en fonction du régime moteur pendant l'étape 1B, et
- établir le second ensemble de données de comparaison de manière à représenter le couple de ralentissement du moteur en fonction du régime moteur pendant l'étape 2B.

**13.** Produit de programme informatique selon la revendication 12, **caractérisé en ce que** le produit de programme informatique comporte un code de programme informatique pour amener l'unité de commande de moteur ou un autre ordinateur relié à l'unité de commande de moteur à établir la valeur de test en formant la différence entre le second ensemble de données de comparaison et le premier ensemble de données de comparaison en fonction du régime moteur, et en formant ensuite la moyenne ou une moyenne pondérée de cette différence sur la totalité ou une partie donnée de l'intervalle de régime moteur entre le régime moteur supérieur et le régime moteur inférieur.

**14.** Produit de programme informatique selon l'une quelconque des revendications 11-13, **caractérisé en ce que** le produit de programme informatique comporte un code de programme informatique pour amener l'unité de commande de moteur ou un autre ordinateur relié à l'unité de commande de moteur à :

- exécuter une séquence de test, comportant ledit premier cycle de test et ledit second cycle de test, de manière séparée pour chaque cylindre individuel du moteur, avec les mêmes conditions de test ou des conditions de test au moins sensiblement identiques, et avec le même temps d'alimentation appliqué au cylindre de test de l'étape 2B dans chaque séquence de test, de manière à établir une valeur de test séparée pour chaque cylindre individuel du moteur, et

- comparer mutuellement les valeurs de test pour les cylindres afin d'établir si l'un quelconque des cylindres fonctionne incorrectement.

**15.** Produit de programme informatique selon la revendication 14, **caractérisé en ce que** le produit de programme informatique comporte un code de programme informatique pour amener l'unité de commande de moteur ou un autre ordinateur relié à l'unité de commande de moteur à comparer mutuellement les valeurs de test pour les cylindres en établissant l'écart de la valeur de test pour un cylindre individuel par rapport à la moyenne des valeurs de test pour tous les cylindres du moteur.

**16.** Produit de programme informatique selon la revendication 15, **caractérisé en ce que** le produit de programme informatique comporte un code de programme informatique pour amener l'unité de commande de moteur ou un autre ordinateur relié à l'unité de commande de moteur à comparer l'écart de la valeur de test pour un cylindre individuel par rapport à la moyenne des valeurs de test pour tous les cylindres du moteur, avec une valeur donnée d'écart représentant un écart autorisé pour un cylindre fonctionnant correctement.

**17.** Produit de programme informatique selon l'une quelconque des revendications 11-16, **caractérisé en ce que** le produit de programme informatique comporte un code de programme informatique pour amener l'unité de commande de moteur ou un autre ordinateur relié à l'unité de commande de moteur à :

- utiliser le premier ensemble de données de test pour établir un premier ensemble de données de dérivée concernant la dérivée du régime moteur en fonction du régime moteur pendant l'étape 1B,
- établir le premier ensemble de données de comparaison sur la base de ce premier ensemble de données de dérivée,
- utiliser le second ensemble de données de test pour établir un second ensemble de données de dérivée concernant la dérivée du régime moteur en fonction du régime moteur pendant l'étape 2B, et
- établir le second ensemble de données de comparaison sur la base de ce second ensemble de données de dérivée.

**18.** Produit de programme informatique selon la revendication 17, **caractérisé en ce que** le produit de programme informatique comporte un code de programme informatique pour amener l'unité de commande de moteur ou un autre ordinateur relié à l'unité de commande de moteur à :

- établir le premier ensemble de données de comparaison sur la base du premier ensemble de données de dérivée en multipliant la dérivée du régime moteur par une valeur de moment d'inertie représentant le moment d'inertie des pièces du moteur et la transmission associée qui sont en rotation pendant l'exécution des premier et second cycles de test, et
- établir le second ensemble de données de comparaison sur la base du second ensemble de données de dérivée en multipliant la dérivée du régime moteur par la valeur de moment d'inertie.

**19.** Produit de programme informatique selon l'une quelconque des revendications 11-18, **caractérisé en ce que** le produit de programme informatique comporte un support de mémorisation de données (34), qui est lisible par une unité de commande électronique (30) et qui a ledit code de programme informatique mémorisé sur celui-ci.

**20.** Ordinateur, tel qu'un bloc de commande électronique (4) d'un véhicule à moteur ou un ordinateur externe de véhicule (10), comportant des moyens d'exécution (31), une mémoire (33) reliée aux moyens d'exécution et un support de mémorisation de données (34) relié aux moyens d'exécution, dans lequel le code de programme informatique d'un produit de programme informatique selon l'une quelconque des revendications 11-19 est mémorisé sur ledit support de mémorisation de données (34).

Fig 1

Fig 2

Fig 3

Fig 4

Fig 5

Fig 6

Fig 7

Start computer program  $\diagup$ S1

Request start of
cylinder test  $\diagdown$ S2

NO

Conditions fulfilled ?  $\diagdown$ S3

YES

S4

Execute first test cycle

S5

Execute second test cycle

S6

Establish test value

NO

All cylinders tested ?  $\diagdown$ S7

YES

Compare test values  $\diagdown$ S8

Display test result  $\diagdown$ S9

Fig 8

**EP 1 983 326 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19540826 A1
- EP 1520163 B1
- US 5709192 A